# EUROPEAN PATENT SPECIFICATION

(11) **EP 3 974 786 B1**
(45) Date of publication and mention of the grant of the patent: **31.07.2024**
(21) Application number: 21198938.9
(22) Date of filing: 24.09.2021
(51) Int. Cl.: G01F 23/263

(54) **DIFFERENTIAL CAPACITANCE CONTINUOUS LEVEL SENSOR SYSTEM AND METHOD FOR MEASURING A LIQUID LEVEL IN A TANK**
KONTINUIERLICHES FÜLLSTANDSENSORSYSTEM MIT DIFFERENTIELLER KAPAZITÄT UND VERFAHREN ZUM MESSEN EINES FLÜSSIGKEITSFÜLLSTANDS IN EINEM TANK
SYSTÈME DE CAPTEUR DE NIVEAU CONTINU À CAPACITÉ DIFFÉRENTIELLE ET PROCÉDÉ DE MESURE D'UN NIVEAU DE LIQUIDE DANS UN RÉSERVOIR

(30) Priority: 29.09.2020 US 202063084791 P
(43) Date of publication of application: 30.03.2022
(73) Proprietor: B/E Aerospace, Inc., Winston-Salem, NC 27105 (US)
(72) Inventor: SRIKANTEGOWDA, Avinash Hasirumane, Mukilteo, 98275 (US); BUNIAK, Bradley J., Woodinville, 98072 (US); HOANG, Thao, Arlington, 98223 (US)
(74) Representative: Dehns

(56) References cited:
- US-A- 4 457 170
- US-A- 5 103 368
- US-A- 5 423 214
- US-A- 6 016 697
- US-B2- 6 844 743

## Description

### BACKGROUND

### 1. Field

The present disclosure relates to liquid level sensing, and more particularly to continuous capacitive liquid level sensors.

### 2. Description of Related Art

Measuring continuous liquid level, e.g. in a waste tank, is challenging in flight. Continuous level sensing refers to the ability to determine a liquid level at almost any point along the height of the tank. Traditional, cost-effective and reliable solutions include point level sensors, which are only able to determine whether the level is at a certain point, e.g. 75% full, 100% full level indications. Except for absolute pressure sensors, all existing continuous level sensing technologies tend to not be as reliable for waste-water liquid level measurements, e.g. ultrasonic sensors, where the signals can readily be distorted by thicker mediums and/or solids in suspended in the liquid, or strain gauge sensors, which tend to not be as accurate in view of the varying density of the medium. Absolute pressure sensors, however, tend to be expensive, making their use largely impractical in some scenarios.

The conventional techniques have been considered satisfactory for their intended purpose. However, there is an ever present need for reduced cost, increased reliability, and improved systems and methods a liquid level measurement sensor system. This disclosure provides a solution for this need. US 6 844 743 B2 describes a capacitive probe for measuring the level of an electrolyte-conducting liquid in a vessel.

### SUMMARY

A liquid level measurement sensor system includes an inner covering, an outer covering surrounding the outer periphery of the inner covering, a space defined between the inner and outer coverings, at least one outer capacitive sense element positioned in the space between the inner and outer coverings, and at least one inner referential capacitive sense element positioned within the inner covering. The outer capacitive sense element is configured and adapted to measure a liquid level. The inner referential capacitive sense element configured and adapted to compensate for environmental changes.

The at least one outer capacitive sense element is a plurality of outer capacitive sense elements arranged in a longitudinal array. Each of the outer capacitive sense elements can be spaced apart from one another along a length of the outer covering. The at least one inner referential capacitive sense element is a plurality of inner referential capacitive sense elements arranged in a longitudinal array. Each of the inner referential capacitive sense elements can be spaced apart from one another along a length of the inner covering. Each of the outer capacitive sense elements is positioned even with a respective one of the inner referential capacitive sense elements to form a capacitive sensor element pair. Each capacitive sensor element pair is spaced apart from one another along the length of the inner covering. The outer covering can include a polytetrafluoroethylene (PTFE) material. The inner covering can include an acrylic material. The system can include a pair of end caps. One of the end caps can be on a first end of the outer covering and wherein a second one of the end caps can be on a second end of the outer covering opposite from the first.

In accordance with another aspect, a method for measuring a liquid level in a tank includes taking a capacitance reading with at least one outer capacitive sense element positioned in a space between an inner covering and outer covering, taking a referential capacitance reading with at least one inner referential capacitive sense element positioned within the inner covering, comparing the capacitance reading with the referential capacitance reading to obtain a differential capacitance, and determining a liquid level in the tank with the differential capacitance.

Taking the capacitance reading with the at least one outer capacitive sense element positioned in the space between the inner covering and the outer covering includes taking a plurality of capacitance readings with a plurality of respective outer capacitive sense elements. Taking the referential capacitance reading with the at least one inner referential capacitive sense element positioned within the inner covering includes taking a plurality of referential capacitance readings with a plurality of respective inner referential capacitive sense elements. Comparing the capacitance reading with the referential capacitance reading to obtain the differential capacitance includes comparing each of the plurality of capacitance readings with a respective one of the referential capacitance readings to obtain a plurality of differential capacitances.

In accordance with another aspect, a liquid storage system includes a tank configured and adapted to hold at least one liquid and the liquid level measurement sensor system, as described above, positioned in the tank, wherein the liquid level measurement sensor system is configured and adapted to determining a liquid level in the tank with the differential capacitance. The tank includes at least one of a metallic or composite material.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:

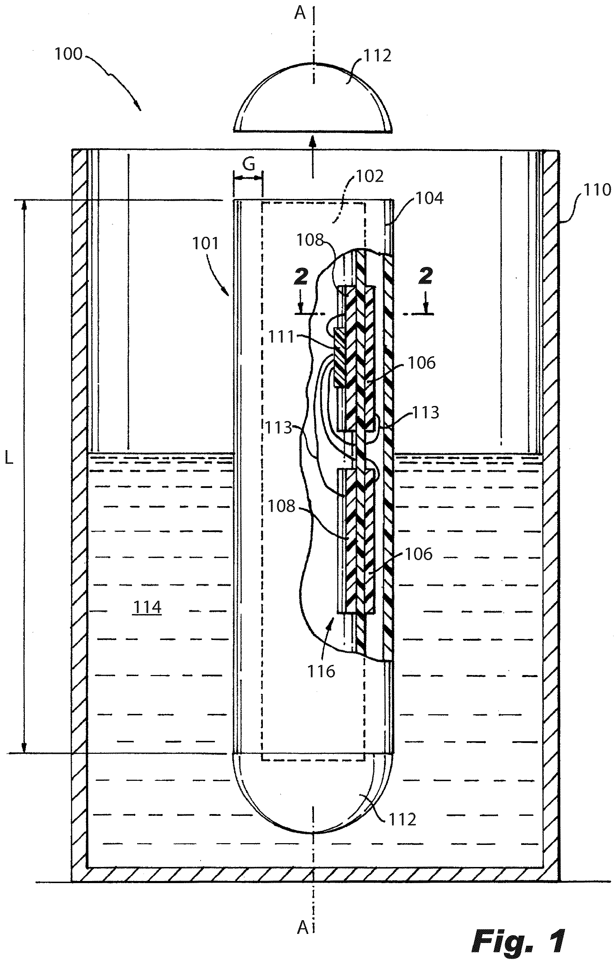

Fig. 1 is a schematic partial cross-section side elevation view of a liquid storage system having liquid level measurement sensor system constructed in accordance with the present disclosure, showing the inner and outer coverings with outer capacitive sense elements and referential capacitive sense elements, where the outer covering has been partially cut-away; and

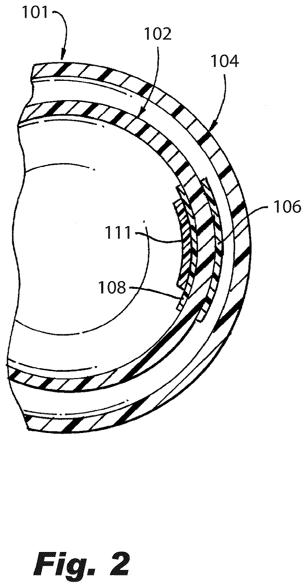

Fig. 2 is a schematic cross-sectional top elevation view of the liquid level measurement sensor system of Fig. 1, showing an outer capacitive sense element between the inner and outer coverings and a referential capacitive sense element within the inner covering.

### DETAILED DESCRIPTION OF THE PREFERRED EMBODIMENTS

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of liquid storage systems and liquid level measurement sensor systems in accordance with the disclosure, or aspects thereof, are provided in Fig. 2, as will be described. The liquid level measurement sensor system and methods described herein can provide a non-intrusive sensor to provide continuous liquid level measurement (e.g. waste-water, potable water, fuel, oil, or the like).

As shown in Figs. 1-2, a liquid storage system 100 includes a tank 110 configured and adapted to hold at least one liquid 114 and the liquid level measurement sensor system 101, as described above, positioned in the tank 110, wherein the liquid level measurement sensor system 101 is configured and adapted to determining a liquid level in the tank 110. The term liquid as referred to herein can include a variety of mediums, e.g. those with only liquid, or those with solids entrained in a liquid, such as waste-water. The tank 110 includes at least one of a metallic or composite material. The liquid level measurement sensor system 101 includes an inner covering 102, an outer covering 104 surrounding the outer periphery of the inner covering 102, and a space G defined between the inner and outer coverings 102 and 104. The system 101 includes a pair of end caps 112. One of the end caps 112 is on a first end of the outer covering 104 and a second one of the end caps 112 is on a second end of the outer covering 104 opposite from the first. The end caps 112 seal the interior of covering 104 from the liquid in the tank 110. One of the end caps 112 at the top of the covering 104 (as oriented in Fig. 1) can include openings/connections for electrical communication with the capacitance sense elements, described below. The top end cap 112 can also house all the necessary electronics and/or controllers to capture capacitance from the sensors, e.g. sensor elements 106 and 108 described below.

With continued reference to Fig. 1, a plurality of outer capacitive sense elements 106, e.g. primary capacitive sensors, are positioned in the space between the inner and outer coverings 102 and 104. A plurality of inner referential capacitive sense elements 108, e.g. reference capacitive sensors, are positioned within the inner covering 102. Inner covering 102 and outer covering 104 are generally tube shaped and define a longitudinal axis A, but can also be shaped as a rectangular tube, conical cylinder, semi-circle shell or any other shape as long as the outer capacitive sense elements 106 and the referential capacitive sense elements 108 are placed such a way that outer capacitive sense elements 106 are facing the media and the referential capacitive sense elements 108 are behind their respective outer capacitive sense elements 106 and the other sides of the referential capacitive sense elements 108 are shielded or covered dielectrically by the inner covering 102 structure. Sense elements 106 and 108 can both be copper plate sense elements.

As shown in Fig. 1, the plurality of outer capacitive sense elements 106 are arranged in a longitudinal array, spaced apart from one another along a length L of the outer covering 104. The outer capacitive sense elements 106 are each configured and adapted to measure a liquid level. The plurality of inner referential capacitive sense elements 108 are arranged in a longitudinal array, spaced apart from one another along a length of the inner covering 102, which for the purposes of this disclosure, length L of the outer covering 104 (excluding caps 112) is approximately the same as the length of the inner covering 102. Each of the outer capacitive sense elements 106 are positioned even with a respective one of the inner referential capacitive sense elements 108 to form a capacitive sensor element pair 116. Each pair 116 operates as a differential sensor thereby compensating for environmental factors. Each capacitive sensor element pair 116 is spaced apart from one another along the lengths of the inner covering 102 and outer covering 104.

With continued reference to Fig. 1, in a given pair 116, outer capacitive sense element 106 and inner referential capacitive sense element 108 are identical in surface area and dimension such that any factor of environmental conditions should not affect the differential signals between the two sense elements 106 and 108 in detecting the medium because both will be subject to such conditions and the only difference between the two is one will face the media and other will get shielded from media. This differential nature of each pair 116 compensates for environmental changes, while eliminating the need for electrical ground reference found in traditional sensor systems. Because of the differential nature and the similarities in size and position, the inner referential capacitive sense elements 108 in each pair 116 will avoid the need for calibration during manufacturing and installation.

With continued reference to Fig. 1, as the media in the tank 110 rises past a given sensor element pair 116 the dielectric of the media will cause the outer capacitive sense element 106 to generate a larger capacitance than the inner referential capacitive sense element 108 behind it since they are separated by the inner covering 102, thereby generating a larger differential capacitance for that pair 116. The sense elements 106 and 108 of each pair 116 are operatively connected to a capacitance-to digital converter (CDC) chip 111 via respective leads 113. In order to connect to chip 111 to outer capacitive sense element 106 a lead 113 can go through a hole in the thickness of inner covering 102. More than one pair 116 can be connected to the same chip 111, as shown in Fig. 1, or each pair can have its own chip 111. The output of the chip 111 is operatively connected via a lead or the like to a micro-controller chip. The output can be the differential capacitance for a given pair 116 or the independent values (which can then be compared by the micro-controller chip, not shown). The differential capacitances for each pair 116 along the lengths of coverings 102 and 104 can be compared to one another with the micro-controller chip to determine where along the length the fluid medium stops/starts, thereby providing the level of the liquid within the tank. By having a plurality of differential capacitances along the lengths of coverings 102 and 104, the likelihood of false level readings can be reduced.

As shown in Figs. 1 and 2, the outer covering 104 acts as a dielectric and can include a polytetrafluoroethylene (PTFE) material, e.g. Teflon ^{®} available from The Chemours Company FC, LLC of Wilmington, DE, or other suitable dielectric material. A PTFE material makes it more difficult for the waste media to stick to the surface of covering 104 and cause incorrect reading. Outer capacitive sense elements 106 operate on the fringe effect from the dielectric medium (e.g. the outer covering 104). The inner covering 102 can be made of a dielectric material such as an acrylic material, or other suitable material. The walls of inner covering 102 can have a thickness of approximately 5 mm (0.199 inches), or a thickness ranging from 1/8 to 1/4 of an inch. The outer covering 104 is the only one that comes in direct contact with the liquid, e.g. waste media. The outer capacitive sense elements 106 measure the level of the waste media and act as a shield to the inner most capacitive sensor elements 108. The liquid level measurement sensor system 101 works both on metal and composite tank material. Sensor system 101 is cost effective and also consumes very little power, due to the use of digital technology, as compared with traditional sensor systems. Moreover, because the sensor system 101 is contained within outer covering 104, system 101 is non-intrusive and can be combined with a cartridge for quick release and maintenance. Those skilled in the art will also readily appreciate that a flexible covering design could be used for easy removal. It is also contemplated that sense elements 106 and 108 could also be read/used in conjunction with other low cost sensor technology for better accuracy and assistance in reading.

A method for measuring a liquid level in a tank, e.g. tank 110, includes taking a plurality of respective capacitance readings with a plurality of outer capacitive sense elements, e.g. capacitive sense elements 106, each positioned in a space, e.g. space G, between an inner covering and outer covering, e.g. inner and outer coverings 102 and 104, respectively. The method includes taking a plurality of respective referential capacitance readings with a plurality of inner referential capacitive sense elements, e.g. sense elements 108, each positioned within the inner covering. The method includes comparing each capacitance reading with a respective one of the referential capacitance readings to obtain a plurality of differential capacitances, where each differential capacitance is associated with a given height in a tank (e.g. the height of the pair of sensors from which the differential capacitance was determined). The method includes determining a liquid level in the tank with the differential capacitances. Those skilled in the art will readily appreciate that the differential capacitances can be converted to a given liquid level by using a micro-controller chip, or other digital processing device. For example, by having a plurality of differential capacitances along the length of inner and outer coverings, determining a liquid level in the tank can include analyzing the plurality of differential capacitances along the length and identifying a point of change. The point of change is indicative of where the liquid in the tank stops/begins, thereby providing a liquid level height. Generally, the differential capacitances should be higher where a liquid is present in the tank and lower where there is no liquid. The micro-controller chip is configured and adapted to decide which sense element is out of order by cross checking with other sense elements. For example, if a first lower pair of sense elements is indicating no media and the two or three pairs of sense elements higher than the first are indicating media, the first lower pair can be easily isolated for further reading.

The methods and systems of the present disclosure, as described above and shown in the drawings, provide for more reliable, lower-cost, continuous liquid level measurement systems, that are non-intrusive and low maintenance as compared with traditional continuous liquid level measurement options. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A liquid level measurement sensor system comprising:
an inner covering (102);
an outer covering (104) surrounding an outer periphery of the inner covering;
a space defined between the inner and outer coverings;
at least one outer capacitive sense element (106) positioned in the space between the inner and outer coverings, wherein the outer capacitive sense element (106) is configured and adapted to measure a liquid level; and
at least one inner referential capacitive sense element (108) positioned within the inner covering, wherein the inner referential capacitive sense element (108) configured and adapted to compensate for environmental changes, and **characterized in that** the at least one outer capacitive sense element (106) is a plurality of outer capacitive sense elements arranged in a longitudinal array, wherein the at least one inner referential capacitive sense element (108) is a plurality of inner referential capacitive sense elements arranged in a longitudinal array, wherein each of the outer capacitive sense elements are positioned even with a respective one of the inner referential capacitive sense elements to form respective capacitive sensor element pairs, wherein each capacitive sensor element pair is spaced apart from one another along a length of the inner covering.

2. The liquid level measurement sensor system of claim 1, wherein each of the outer capacitive sense elements (106) are spaced apart from one another along a length of the outer covering.

3. The liquid level measurement sensor system of claim 1, wherein each of the inner referential capacitive sense elements are spaced apart from one another along a length of the inner covering.

4. The liquid level measurement sensor system of any preceding claim, wherein the outer covering includes a polytetrafluoroethylene (PTFE) material.

5. The liquid level measurement sensor system of any preceding claim, wherein the inner covering includes an acrylic material.

6. The liquid level measurement sensor system of any preceding claim, further comprising a pair of end caps, wherein one of the end caps is on a first end of the outer covering and wherein a second one of the end caps is on a second end of the outer covering opposite from the first.

7. A method for measuring a liquid level in a tank, the method comprising:
taking a capacitance reading with at least one outer capacitive sense element (108) positioned in a space between an inner covering and an outer covering;
taking a referential capacitance reading with at least one inner referential capacitive sense element (108) positioned within the inner covering;
comparing the capacitance reading with the referential capacitance reading to obtain a differential capacitance; and
determining a liquid level in the tank with the differential capacitance, **characterised in that** taking the capacitance reading with the at least one outer capacitive sense element positioned in the space between the inner covering and the outer covering includes taking a plurality of capacitance readings with a plurality of respective outer capacitive sense elements and wherein taking the referential capacitance reading with the at least one inner referential capacitive sense element positioned within the inner covering includes taking a plurality of referential capacitance readings with a plurality of respective inner referential capacitive sense elements, and wherein comparing the capacitance reading with the referential capacitance reading to obtain the differential capacitance includes comparing each of the plurality of capacitance readings with a respective one of the referential capacitance readings to obtain a plurality of differential capacitances.

8. A liquid storage system comprising:
a tank (110) configured and adapted to hold at least one liquid; and
the liquid level measurement sensor system, as recited in any of claims 1 to 6, positioned in the tank, wherein the liquid level measurement sensor system is configured and adapted to determining a liquid level in the tank with a differential capacitance.

9. The liquid storage system as recited in claim 8, wherein the tank (110) includes at least one of a metallic or composite material.

## Patentansprüche

1. Sensorsystem zur Messung des Flüssigkeitsfüllstands, umfassend:
eine innere Abdeckung (102);
eine äußere Abdeckung (104), die einen äußeren Umfang der inneren Abdeckung umgibt;
ein zwischen der inneren und äußeren Abdeckung definierter Raum; mindestens ein äußeres kapazitives Sensorelement (106), das in dem Raum zwischen der inneren und äußeren Abdeckung positioniert ist, wobei das äußere kapazitive Sensorelement (106) so konfiguriert und angepasst ist, dass es einen Flüssigkeitsfüllstand misst; und
mindestens ein inneres referenzielles kapazitives Sensorelement (108), das innerhalb der inneren Abdeckung angeordnet ist, wobei das innere referenzielle kapazitive Sensorelement (108) so konfiguriert und angepasst ist, dass es Umgebungsänderungen kompensiert, und **dadurch gekennzeichnet, dass** das mindestens eine äußere kapazitive Sensorelement (106) eine Vielzahl von äußeren kapazitiven Sensorelementen ist, die in einer Längsanordnung angeordnet ist, und wobei das mindestens eine innere referenzielle kapazitive Sensorelement (108) eine Vielzahl von inneren referenziellen kapazitiven Sensorelementen ist, die in einer Längsanordnung angeordnet ist, wobei jedes der äußeren kapazitiven Sensorelemente in einer Ebene mit einem jeweiligen der inneren referenziellen kapazitiven Sensorelemente angeordnet ist, um jeweilige kapazitive Sensorelementpaare zu bilden, wobei jedes kapazitive Sensorelementpaar entlang einer Länge der inneren Abdeckung voneinander beabstandet ist.

2. Sensorsystem zur Messung des Flüssigkeitsfüllstands nach Anspruch 1, wobei jedes der äußeren kapazitiven Sensorelemente (106) entlang einer Länge der äußeren Abdeckung voneinander beabstandet ist.

3. Sensorsystem zur Messung des Flüssigkeitsfüllstands nach Anspruch 1, wobei jedes der inneren referenziellen kapazitiven Sensorelemente entlang einer Länge der inneren Abdeckung voneinander beabstandet ist.

4. Sensorsystem zur Messung des Flüssigkeitsfüllstands nach einem der vorhergehenden Ansprüche, wobei die äußere Abdeckung ein Polytetrafluorethylen (PTFE)-Material beinhaltet.

5. Sensorsystem zur Messung des Flüssigkeitsfüllstands nach einem der vorhergehenden Ansprüche, wobei die innere Abdeckung ein Acrylmaterial beinhaltet.

6. Sensorsystem zur Messung des Flüssigkeitsfüllstands nach einem der vorhergehenden Ansprüche, ferner umfassend ein Paar Endkappen, wobei sich eine der Endkappen an einem ersten Ende der äußeren Abdeckung befindet und wobei sich eine zweite der Endkappen an einem zweiten Ende der äußeren Abdeckung gegenüber dem ersten Ende befindet.

7. Verfahren zum Messen eines Flüssigkeitsfüllstands in einem Tank, wobei das Verfahren umfasst:
Aufnehmen einer Kapazitätsmessung mit mindestens einem äußeren kapazitiven Sensorelement (108), das sich in einem Raum zwischen einer inneren Abdeckung und einer äußeren Abdeckung befindet;
Aufnehmen einer kapazitiven Referenzmessung mit mindestens einem inneren kapazitiven Referenzelement (108), das sich innerhalb der inneren Abdeckung befindet;
Vergleichen des Kapazitätswertes mit dem Referenzkapazitätswert, um eine Differenzkapazität zu erhalten;
und
Bestimmen eines Flüssigkeitsfüllstands in dem Tank mit der Differenzkapazität, **dadurch gekennzeichnet, dass** das Aufnehmen des Kapazitätsmesswerts mit dem mindestens einen äußeren kapazitiven Sensorelement, das in dem Raum zwischen der inneren Abdeckung und der äußeren Abdeckung positioniert ist, das Aufnehmen einer Vielzahl von Kapazitätsmesswerten mit einer Vielzahl von jeweiligen äußeren kapazitiven Sensorelementen beinhaltet und wobei das Aufnehmen des Referenzkapazitätsmesswerts mit dem mindestens einen inneren kapazitiven Referenzsensorelement, das innerhalb der inneren Abdeckung positioniert ist, das Aufnehmen einer Vielzahl von Referenzkapazitätsmesswerten mit einer Vielzahl von jeweiligen inneren kapazitiven Referenzsensorelementen beinhaltet, und
wobei das Vergleichen des Kapazitätsmesswerts mit dem Referenzkapazitätsmesswert, um die Differenzkapazität zu erhalten, das Vergleichen jedes der Vielzahl von Kapazitätsmesswerten mit einem jeweiligen der Referenzkapazitätsmesswerte beinhaltet, um eine Vielzahl von Differenzkapazitäten zu erhalten.

8. Flüssigkeitsspeichersystem, umfassend:
einen Tank (110), der so konfiguriert und angepasst ist, dass er mindestens eine Flüssigkeit enthält; und
das Sensorsystem zur Messung des Flüssigkeitsfüllstands nach einem der Ansprüche 1 bis 6, das in dem Tank angeordnet ist,
wobei das Sensorsystem zur Messung des Flüssigkeitsfüllstands so konfiguriert und angepasst ist, dass es einen Flüssigkeitsfüllstand in dem Tank mit einer Differenzkapazität bestimmt.

9. Flüssigkeitsspeichersystem nach Anspruch 8, wobei der Tank (110) mindestens ein metallisches oder ein Verbundmaterial beinhaltet.

## Revendications

1. Système de capteur de mesure de niveau de liquide comprenant :
un revêtement interne (102) ;
un revêtement externe (104) entourant une périphérie externe du revêtement interne ;
un espace défini entre les revêtements interne et externe ; au moins un élément de détection capacitif externe (106) positionné dans l'espace entre les revêtements interne et externe, dans lequel l'élément de détection capacitif externe (106) est configuré et adapté pour mesurer un niveau de liquide ; et
au moins un élément de détection capacitif référentiel interne (108) positionné à l'intérieur du revêtement interne, dans lequel l'élément de détection capacitif référentiel interne (108) configuré et adapté pour compenser les changements environnementaux, et **caractérisé en ce que** l'au moins un élément de détection capacitif externe (106) est une pluralité d'éléments de détection capacitifs externes agencés dans un réseau longitudinal, dans lequel l'au moins un élément de détection capacitif référentiel interne (108) est une pluralité d'éléments de détection capacitifs référentiels internes agencés dans un réseau longitudinal, dans lequel chacun des éléments de détection capacitifs externes est positionné à égalité avec l'un respectif des éléments de détection capacitifs référentiels internes pour former des paires d'éléments de capteur capacitifs respectifs, dans lequel chaque paire d'éléments de capteur capacitifs est espacée l'une de l'autre le long d'une longueur du revêtement interne.

2. Système de capteur de mesure de niveau de liquide selon la revendication 1, dans lequel chacun des éléments de détection capacitifs externes (106) est espacé par rapport aux autres le long d'une longueur du revêtement externe.

3. Système de capteur de mesure de niveau de liquide selon la revendication 1, dans lequel chacun des éléments de détection capacitifs référentiels internes est espacé par rapport aux autres le long d'une longueur du revêtement interne.

4. Système de capteur de mesure de niveau de liquide selon une quelconque revendication précédente, dans lequel le revêtement externe comporte un matériau en polytétrafluoroéthylène (PTFE).

5. Système de capteur de mesure de niveau de liquide selon une quelconque revendication précédente, dans lequel le revêtement interne comporte un matériau acrylique.

6. Système de capteur de mesure de niveau de liquide selon une quelconque revendication précédente, comprenant en outre une paire de capuchons, dans lequel l'un des capuchons se trouve sur une première extrémité du revêtement externe et dans lequel un second des capuchons se trouve sur une seconde extrémité du revêtement externe à l'opposé du premier.

7. Procédé de mesure d'un niveau de liquide dans un réservoir, le procédé comprenant :
le fait d'effectuer une lecture de capacité avec au moins un élément de détection capacitif externe (108) positionné dans un espace entre un revêtement interne et un revêtement externe ;
le fait d'effectuer une lecture de capacité référentielle avec au moins un élément de détection capacitif référentiel interne (108) positionné à l'intérieur du revêtement interne ;
la comparaison de la lecture de capacité avec la lecture de capacité référentielle pour obtenir une capacité différentielle ; et
la détermination d'un niveau de liquide dans le réservoir avec la capacité différentielle, **caractérisé en ce que** le fait d'effectuer la lecture de capacité avec l'au moins un élément de détection capacitif externe positionné dans l'espace entre le revêtement interne et le revêtement externe comporte le fait d'effectuer une pluralité de lectures de capacité avec une pluralité d'éléments de détection capacitifs externes respectifs et dans lequel le fait d'effectuer la lecture de capacité référentielle avec l'au moins un élément de détection capacitif référentiel interne positionné à l'intérieur du revêtement interne comporte le fait d'effectuer une pluralité de lectures de capacité référentielles avec une pluralité d'éléments de détection capacitifs référentiels internes respectifs, et dans lequel la comparaison de la lecture de capacité avec la lecture de capacité référentielle pour obtenir la capacité différentielle comporte la comparaison de chacune de la pluralité de lectures de capacité avec une lecture respective des lectures de capacité référentielles pour obtenir une pluralité de capacités différentielles.

8. Système de stockage de liquide comprenant :
un réservoir (110) configuré et adapté pour contenir au moins un liquide ; et
le système de capteur de mesure de niveau de liquide, selon l'une quelconque des revendications 1 à 6, positionné dans le réservoir, dans lequel le système de capteur de mesure de niveau de liquide est configuré et adapté pour déterminer un niveau de liquide dans le réservoir avec une capacité différentielle.

9. Système de stockage de liquide selon la revendication 8, dans lequel le réservoir (110) comporte au moins l'un parmi un matériau métallique ou composite.
